# EUROPÄISCHE PATENTSCHRIFT

(11) **EP 2 533 089 B1**
(45) Veröffentlichungstag und Bekanntmachung des Hinweises auf die Patenterteilung: **09.08.2017**
(21) Anmeldenummer: 12171035.4
(22) Anmeldetag: 06.06.2012
(51) Int. Cl.: H02G 3/06, G02B 6/44, F16L 39/00

(54) **Einrichtung zur axialen Verbindung von Rohren**
Device for axially connecting pipes
Dispositif de connexion axiale de tubes

(30) Priorität: 09.06.2011 DE 102011050984
(43) Veröffentlichungstag der Anmeldung: 12.12.2012
(73) Patentinhaber: egeplast international GmbH, 48268 Greven (DE)
(72) Erfinder: Wolter, Ralf, 48477 Hörstel-Riesenbeck (DE); Dr. Stranz, Michael, 49086 Osnabrück (DE)
(74) Vertreter: Fritz, Edmund Lothar

(56) Entgegenhaltungen:
- EP-A1- 1 760 508
- EP-A1- 2 045 504
- DE-A1- 3 717 296
- FR-A1- 2 758 400
- US-A1- 2002 191 941
- US-A1- 2003 080 555
- US-A1- 2005 259 930
- US-A1- 2008 279 506
- US-A1- 2010 034 507

## Beschreibung

Die vorliegende Erfindung betrifft eine Einrichtung zur axialen Verbindung, Abdichtung und/oder zum Verschließen von Rohren, umfassend zwei die zu verbindenden/abzudichtenden Rohre umgreifende Muffenhalbschalen, wenigstens ein von den Muffenhalbschalen aufgenommenes Dichtelement sowie eine außen auf die Muffenhalbschalen aufbringbare Vorrichtung, um diese zu Klemmen und/oder gegenseitig zu Verspannen, wobei die außen auf die Muffenhalbschalen aufbringbare Vorrichtung ein Außengehäuse mit einem Innengewinde umfasst und die Muffenhalbschalen mit einem Außengewinde versehen sind, wobei das Außengehäuse unter Klemmwirkung auf die Muffenhalbschalen aufschraubbar ist, wobei Einzelrohre zu einem Rohrbündel gehören, welches eine äußere Umhüllung hat, die in eine Einführöffnung der Muffenhalbschalen eingeführt wird.

Verbindungselemente für in Kabelkanälen verlegte Rohre mit Halbschalenrohren werden beispielsweise in der DE 195 12 837 C2 beschrieben. Bei diesem bekannten System werden Dichtelemente verwendet, über die ein Gehäuse gebracht wird, welches mittels eines oder mehrerer Verschlüsse so zusammengezogen wird, dass sich das Dichtelement fest um die Rohrverbindung an der Stoßstelle legt und somit die Reparaturstelle druckdicht verschließt. Über die Reparaturstelle wird ein aus Halbschalen bestehendes Rohr gelegt, welches mittels je einer für dessen Stoßstelle mit dem Kabelkanalschutzrohr vorgesehenen Muffe dicht verbunden wird. Das Gehäuse ist zweiteilig und wird durch die Verschlüsse geklammert.

Die EP 1 289 087 B1 beschreibt mehrteilige Verschluss- und Abdichtelemente für mit Kabeln belegbare Rohre bestehend aus einem zweiteiligen Gehäuse, an dem entlang seiner Trennebene schwalbenschwanzförmige Verschlusskeile angeformt sind, wobei zwei am Gehäuseumfang um 180 ° versetzte Verbindungsklammern vorgesehen sind und um das Kabel eine zylindrische Dichthülse gelegt ist, die von dem zweiteiligen Gehäuse umfasst ist, wobei zwei schwalbenschwanzförmige Verschlusskeile mit gegenseitiger Verzahnung vorgesehen sind und die beiden Verbindungsklammern einseitig miteinander zu einem Verschlusselement verbunden sind.

In der EP 0 650 007 B1 sind Rohrmuffen aus zwei Halbschalen für Reparaturrohre beschrieben mit einer Dichtung zwischen der abzudichtenden Rohraußenwand und der Muffeninnenwand, wobei die Dichtung mittels zweier schwalbenschwanzförmiger Verschlusskeile mit einem Anpressdruck beaufschlagt wird.

Aus der WO 00/46537 ist ein Kupplungssystem für Rohrleitungen bekannt mit einer Klemmschelle und einem Verschlussmechanismus. Aus dieser Schrift ist es bekannt, an der Klemmschelle innenseitig zackenförmige Erhebungen anzuordnen, die eine Auszugssicherung für die zu verbindenden Rohre in Längsrichtung bilden.

Aus der DE 10 2004 056 859 B3 ist eine Einrichtung zur axialen Verbindung von Rohren der eingangs genannten Gattung bekannt. Hier werden Verbindungsmuffen für einzelne Kabelschutzrohre verwendet, die aus zwei Gehäusehälften bestehen, innerhalb derer ein Dichtmittel aus elastischem Material angeordnet ist, und die mit Hilfe von Verbindungsklammern auf Schwalbenschwanzführungen gegeneinander verspannbar sind.

Schutzrohrsysteme für Kabel, insbesondere für die Telekommunikation und die Daten-, Signal- und Energieübertragung, umfassen in der Regel Rohrbündel aus mehreren Innenrohren, die von einem größeren widerstandsfähigen Außenmantelrohr umhüllt werden. Die Innenrohre können dann Glasfaserkabel oder auch Kupferkabel aufnehmen. Im Bereich von Schächten und Verteilerschränken sind die Rohre meist unterbrochen, damit die in diesen verlegten Kabel zugänglich sind. Daher müssen dort die Rohrbündel gas- und wasserdicht miteinander verbunden werden. Die bislang bekannten Lösungen haben verschiedene Nachteile. Oft werden die Innenrohre unfixiert abgedichtet und können sich daher im Dichtelement verschieben, was zur Undichtigkeit und damit Fehlfunktion des Systems führt. Auch wenn Stützringe verwendet werden, besitzen die bekannten Systeme nur eine vergleichsweise geringe Auszugsfestigkeit. Die Klemmelemente wirken zum Teil auf einen vergleichsweise dünnen Außenmantel, wodurch die Gefahr einer Beschädigung gegeben ist. Die Montage ist oft schwierig, wodurch die Gefahr der Fehlmontage gegeben ist. Einige Systeme benötigen zur Dichtung einen kreisrunden Querschnitt.

Aus der US 2003/080555 A1 ist eine Einrichtung zur axialen Verbindung von Rohren der eingangs genannten Art bekannt, bei der eine äußere rohrförmige Umhüllung von den Muffenhalbschalen aufgenommen wird und lediglich zwischen dieser äußeren Umhüllung und den Enden der Muffenhalbschalen ein Kompressionsring angeordnet wird, der hier eine wasserdichte oder schlammdichte Abdichtung gewährleisten soll sowie für eine höhere Auszugsfestigkeit der äußeren Umhüllung in den Muffenhalbschalen sorgen soll. Die kleineren Einzelrohre, die in der äußeren rohrförmigen Umhüllung liegen, werden hier jedoch nicht abgedichtet. Ferner werden im Stand der Technik weitere Einrichtungen zur axialen Verbindung, Abdichtung und zum Verschließen von Rohren in den Dokumenten US2002/191941-A1, US2008/279506-A1 und US2010/034507-A1 beschrieben. Die Aufgabe der vorliegenden Erfindung besteht darin, eine Einrichtung zur axialen Verbindung von Rohren der eingangs genannten Gattung zur Verfügung zu stellen, die eine bessere Montierbarkeit aufweist, wodurch Fehlmontagen vermieden werden sowie eine bessere Abdichtung der zu einem Rohrbündel gehörenden kleineren Einzelrohre.

Die Lösung dieser Aufgabe liefert eine Einrichtung zur axialen Verbindung von Rohren der eingangs genannten Gattung mit den kennzeichnenden Merkmalen des Hauptanspruchs.

Erfindungsgemäß ist vorgesehen, dass das Dichtelement eine Dichtscheibe oder einen Dichtstern umfasst mit einer Vielzahl von Bohrungen oder Aufnahmen für eine passende und spannungsfreie Lagerung von Einzelrohren, die diese jeweils an ihrem Umfang umschließen, wobei diese Einzelrohre zu einem Rohrbündel gehören, welches eine äußere Umhüllung hat, die in eine Einführöffnung der Muffenhalbschalen eingeführt wird.

Im Gegensatz zu den aus dem Stand der Technik bekannten Lösungen werden somit keine Verbindungsklammern zum Verspannen der Muffenhalbschalen und Anpressen des Dichtelements verwendet, sondern ein die Muffenhalbschalen umschließendes Außengehäuse wird aufgeschraubt, wobei die Bauteile so ausgebildet werden können, dass bei dieser Schraubverbindung eine Pressung erzeugt wird. An dem Dichtelement (den Dichtelementen) und an dem Auszugselement entstehen dadurch die notwendigen Spannungen und die Auszugssicherung wird verbessert.

Bevorzugt ist dabei außen an den Muffenhalbschalen axial an das Außengewinde anschließend eine Konusfläche ausgebildet, der eine ringförmige konische Fläche innenseitig am Außengehäuse zugeordnet ist, so dass beim Aufschrauben des Außengehäuses quasi durch sich aufeinander schiebende Keilflächen die radiale Klemmwirkung erzeugt wird. Das Außengehäuse ist so stabil, dass keine Abrissgefahr besteht wie bei einem dünnen Außenmantel.

Die Auszugssicherung für die zu verbindenden Rohre befindet sich bevorzugt im Bereich der als Rohrklammer dienenden Einführöffnungen der Muffenhalbschalen, welche das zu verbindende Rohr an seinem äußeren Umfang umschließen, wobei dort beispielsweise wenigstens eine Auszugssicherung vorgesehen ist, die ein Zahnprofil, Widerhaken oder andere ein Ausziehen der Rohre in axialer Richtung verhindernde Sperrelemente umfasst.

Erfindungsgemäß werden die einzelnen Innenrohre im Dichtelement geführt und in ihrer Lage im Dichtelement fixiert. In diesen einzelnen Innenrohren können sich dann Kabel befinden, die in einem Verbindungsbereich wie beispielsweise einem Schacht oder Verteilerschrank für Reparatur- oder Wartungszwecke zugänglich gemacht werden. Die druckdichte Verbindung der Rohre in einer solchen Einrichtung ist insbesondere erforderlich, da Glasfaserkabel in Kabelschutzrohre mit Druckluft eingeblasen werden. Darüber hinaus ist eine Abdichtung des Verbindungsbereichs gegen Feuchtigkeit notwendig. Der genannte Dichtstern oder die Dichtscheibe können gegebenenfalls auch am Umfang teilbar sein, ähnlich wie die Muffenhalbschalen.

Die erfindungsgemäße Einrichtung ist so gestaltet, dass sie zu einer passgenauen Lagerung der Innenrohre im Dichtelement führt. Bevorzugt vorhandene konische Bohrungen oder Aufnahmen für die Einzelrohre im Dichtelement erleichtern die Einführung der Einzelrohre in das Dichtelement. Die durch Montage, Betrieb und Lage des Bauteils im Schacht auftretenden unerwünschten Spannungen werden durch die passgenaue Lagerung reduziert oder ganz verhindert, so dass nur Umfangsspannungen, die durch das Dichtelement selbst ausgeübt werden und die Dichtfunktion gewährleisten, auftreten. Querspannungen, die eine Undichtigkeit des Systems hervorrufen könnten, werden so ausgeschlossen. Durch die konstruktionsbedingte Zwangsführung der Einzelrohre werden Montagefehler vermindert bzw. ausgeschlossen. Die Einzelrohre werden auch bei nicht zentrischer Einführung zwangsgeführt. Ferner wird während der Installation eine gegenseitige Verschiebung einzelner Innenrohre im Dichtungselement verhindert.

Das Dichtelement kann beispielsweise als Mehrkomponentensystem ausgeführt werden und dazu aus Werkstoffen mit verschiedenen Eigenschaften bestehen, beispielsweise im Bereich der Aufnahmen für die Einzelrohre zur Erleichterung der Montage aus Kunststoffen wie zum Beispiel PP, PE, PE-HD, PA oder PVC oder anderen Kunststoffen mit oder ohne Verstärkungsmaterialien wie Glasfaser oder Calciumcarbonat und/oder Beifügung von Zusatzstoffen zur Verbesserung der Gleitwirkung, während der Dichtbereich aus Dichtungsmaterialien wie vorzugsweise TPE, EPDM, NBR oder Mischkunststoffen mit Thermoplasten und Polyolefinen und/oder weiteren Elastomeren bestehen kann. Das Dichtelement, das heißt der elastomere Werkstoff, kann bei einem solchen Mehrkomponentensystem zum Beispiel an ein Element aus Kunststoff angespritzt werden.

Gemäß einer bevorzugten Weiterbildung der vorliegenden Erfindung ist in den Muffenhalbschalen wenigstens ein innenseitig radial vorstehender Ringsteg angebracht ist zur axialen Lagefixierung der Dichtscheibe oder des Dichtsterns. Dies können auch zwei solcher Ringstege sein, einer an der vorderen und einer an der hinteren Stirnseite der Dichtscheibe oder des Dichtsterns, wodurch deren axiale Verschiebung in beide Richtungen verhindert wird und somit eine sichere Lagefixierung gegeben ist.

Eine mögliche bevorzugte Lösungsvariante im Rahmen der vorliegenden Erfindung sieht vor, dass die Dichtscheibe oder der Dichtstern einen größeren äußeren Durchmesser aufweisen als die Einführöffnung für die äußere Umhüllung der Einzelrohre. Innerhalb der Muffenhalbschalen besteht somit axial hinter der Einführöffnung ein Freiraum zwischen der äußeren Umhüllung der Einzelrohre und der inneren Wandung der Muffenhalbschalen. Die Dichtscheibe oder der Dichtstern sind jedoch bevorzugt so dimensioniert, dass sie den freien Querschnitt im Innenraum der Muffenhalbschalen mit ihrem äußeren Randbereich vollständig ausfüllen. Dadurch verbleibt mehr Raum für Arbeiten an den Einzelrohren bzw. den in diesen aufgenommenen Kabeln. Der Durchmesser von Dichtscheibe und Dichtstern kann aber auch gleich groß sein wie die Einführöffnung. Diese Variante kann beispielsweise eingesetzt werden, wenn das ankommende Schutzrohr (Kabelschutzrohr), welches von der Einführöffnung aufgenommen wird nicht einen polygonalen Umriss hat, sondern kreisrund im Umriss ist. Der Durchmesser der Einführöffnung entspricht dann dem Querschnitt des Innenraums der beiden Muffenhalbschalen.

Eine besonders bevorzugte Ausführungsvariante der vorliegenden Erfindung sieht vor, dass die Aufnahmen oder Bohrungen der Dichtscheibe oder des Dichtsterns jeweils über einen Teil ihrer axialen Länge über einen Teil ihres Umfangs nach radial außen hin offen sind. Damit wird erreicht, dass über den einen Teil der axialen Länge der Aufnahme das jeweilige Einzelrohr eine gute Führung an seinem Umfang in der Aufnahme hat, aber über einen anderen Teil der axialen Länge diese Aufnahme das Einzelrohr nur über einen radial inneren Teilumfang umschließt, so dass der übrige radial äußere Teilumfang des Einzelrohrs dort für Arbeiten frei zugänglich ist.

Eine vorteilhafte Weiterbildung der vorliegenden Erfindung sieht vor, dass die Einrichtung mindestens einen Sensor und Informationsträger oder einen elektronischen Marker aufweist. Im Gegensatz zu herkömmlichen Verbindungselementen wird gemäß dieser Variante der Erfindung nicht nur eine mechanische Kopplung von Rohrenden (von Rohrbündeln) mit zug- und druckbelastbarer Verbindung und eine Abdichtung gegen die Druckluft bei der Verlegung oder gegen eindringende Feuchtigkeit im Betrieb geschaffen, sondern durch den Sensor und Informationsträger (Sensor-Chip) im Verbindungselement kann eine höhere Betriebssicherheit erreicht werden. Wenn beispielsweise nach der Verlegung ein kritischer Zustand im Bereich des Verbindungselements auftritt und der Verlust einer Funktion des Verbindungselements droht, kann beispielsweise von dem Sensor-Chip eine Meldung ausgegeben werden. Weiterhin kann eine lückenlose Nachverfolgbarkeit (traceability) der verbauten Bauteile ermöglicht werden. Ebenso können beispielsweise Informationen betreffend Aufgaben des Netzmanagements in Bezug auf Logistik, Planung und Wartung der Einrichtung abgefragt werden, deren Abfrage beispielsweise über RFID-Technik möglich ist und die weiterhin dauerhaft dokumentiert und elektronisch gespeichert werden können.

Vorzugsweise sind die zuvor genannten Sensoren und Informationsträger lesbar und/oder beschreibbar, beispielsweise, um so Belegungsraten der Innenrohre mit Glasfaserkabeln oder Serviceintervalle und anstehende oder bereits durchgeführte Inspektionen,(Wartungen) zu dokumentieren. Die Informationen sollten speicherbar und bevorzugt auch überschreibbar sein. Es können beispielsweise Änderungen in der Belegung der Innenrohre erfasst werden oder die Einhaltung bestimmter Fristen, z.B. für Wartungsintervalle.

Die genannten Sensoren und Informationsträger erfassen bevorzugt mindestens eine physikalische Größe wie zum Beispiel Druck oder Feuchtigkeit. Wenn diese physikalischen Größen überwacht werden, kann beispielsweise die Ausgabe eines Alarms bei Auftreten von grenzwertigen Betriebszuständen vorgesehen sein. Ein solcher Alarm kann beispielsweise über ein Mobilfunksignal abgesetzt werden, beispielsweise unter Verwendung der GSM-Technologie (weit verbreiteter Mobilfunkstandard.)

Der erfindungsgemäße Sensor kann beispielsweise ein Gasspürsensor sein, der bei Auftreten einer kritischen Gaskonzentration, welche auf ein Leck hindeutet, ein Alarmsignal oder eine Meldung absetzt, beispielsweise über Mobilfunk in der zuvor geschilderten Weise.

Informationen, die der Sensor und Informationsträger aktiv nach außen abgibt, können beispielsweise mit GPS-Koordinaten verknüpft werden, wodurch sie sich dem jeweiligen Standort des Sensors und der Einrichtung zuordnen lassen. Die Informationen und die zugehörigen Standort-Daten kann man beispielsweise extern in einer Datenbank speichern.

Weiterhin ermöglicht die zuvor genannte Variante der Erfindung es beispielsweise, die Position der im Erdreich verlegten Einrichtung mit hoher Genauigkeit zu orten, beispielsweise hinsichtlich der Lage und auch der Tiefe der Verlegung.

Daten, welche die in den Innenrohren (als Kabelschutzrohre dienend) verlegten Kabel betreffen können erfasst und gespeichert werden. Dies können beispielsweise sein: Daten über den Herstellprozess, Chargen, Material, Durchmesser, Auffindbarkeitscodes, Kabelarten, Kabelgrößen und dergleichen mehr.

Auch wenn sich mehrere solcher Einrichtungen in der Nähe befinden, ist das bei einer Ortung erfassbare Signal eindeutig einer spezifischen erfindungsgemäßen Einrichtung zuzuordnen. Es können auch beispielsweise zwei oder mehrere RFID-Signaturen gleichzeitig erfasst werden.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben.

Dabei zeigen:
Figur 1 eine perspektivische Ansicht einer erfindungsgemäßen Einrichtung zur axialen Verbindung von Rohren gemäß einer möglichen beispielhaften Ausführungsvariante im teilweisen Schnitt;
Figur 2 eine perspektivische Teilansicht der in Figur 1 gezeigten Einrichtung;
Figur 3 eine Seitenansicht eines Teils der erfindungsgemäßen Eirichtung, nämlich eines gemäß einer Variante der Erfindung verwendeten Dichtsterns;
Figur 4 eine perspektivische Ansicht des in Figur 3 gezeigten Dichtsterns;
Figur 5 eine Seitenansicht einer gemäß einer alternativen Variante der Erfindung verwendeten Dichtscheibe;
Figur 6 eine perspektivische Ansicht der in Figur 5 gezeigten Dichtscheibe;
Figur 7 eine Ansicht der beiden Halbschalen des Außengehäuses der Einrichtung im demontierten Zustand;

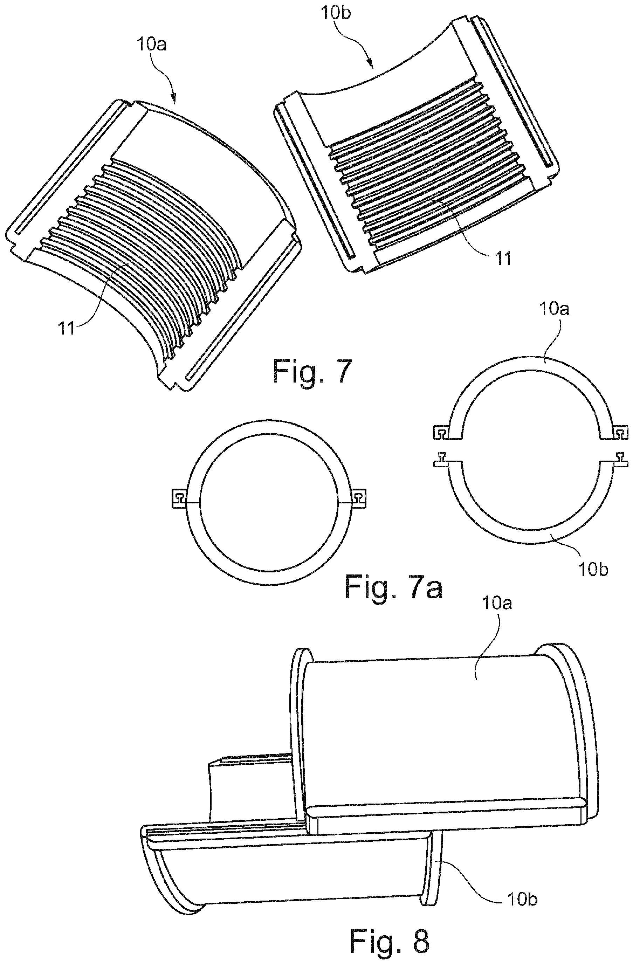

Figur 7 a zwei stirnseitige Ansichten der beiden Halbschalen des Außengehäuses, einmal links im montierten und einmal rechts im demontierten Zustand;
Figur 8 eine Ansicht der beiden Halbschalen des Außengehäuses bei der Montage;

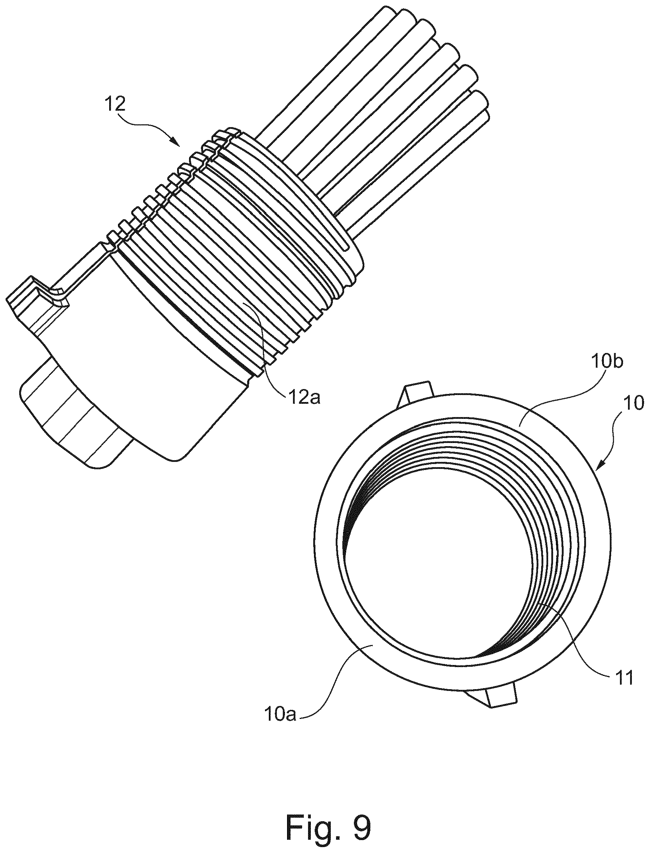

Figur 9 eine Ansicht der an einer Anordnung von Rohren montierten Muffenhalbschalen sowie des separat (rechts unten) dargestellten Außengehäuses;

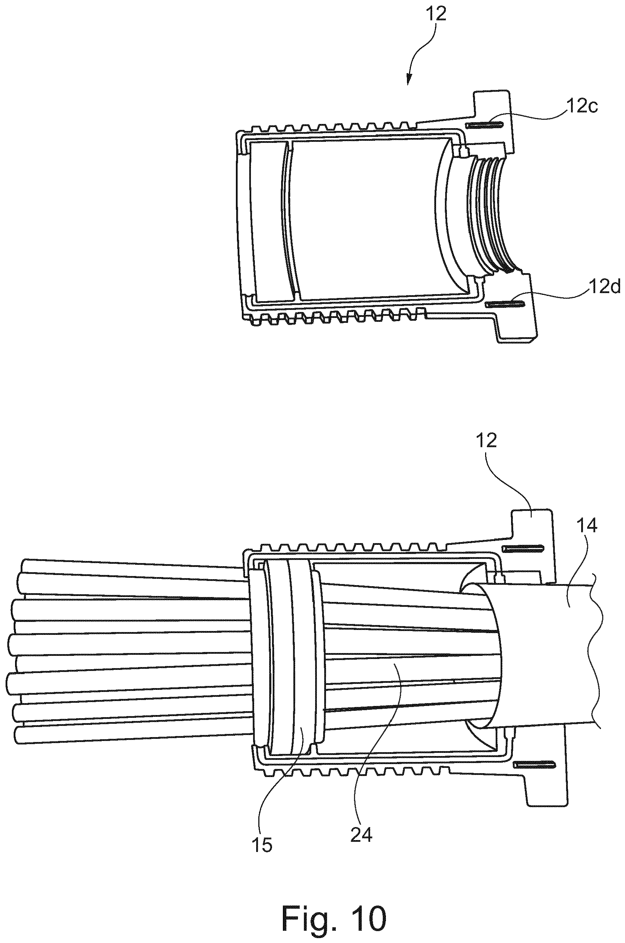

Figur 10 eine weitere Ansicht der Anordnung von Figur 9, wobei jedoch eine der Muffenhalbschalen entfernt wurde, so dass man in den Innenraum hinein schauen kann und diese entfernte Muffenhalbschale oben separat dargestellt ist;

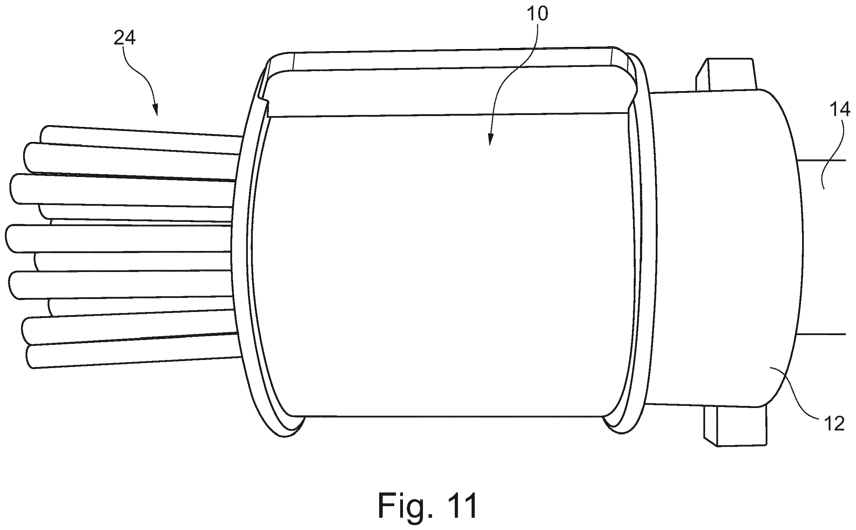

Figur 11 eine Ansicht der vollständig montierten Einrichtung mit Außengehäuse;

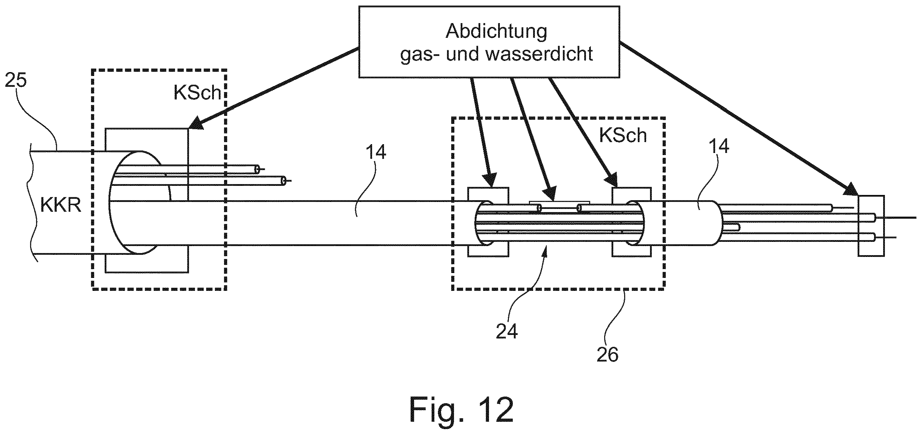

Figur 12 eine schematisch vereinfachte Darstellung einer Anordnung von Rohren, die mittels einer erfindungsgemäßen Einrichtung im Bereich eines Schachts, durch den sie hindurch geführt sind, miteinander dicht zu verbinden sind.

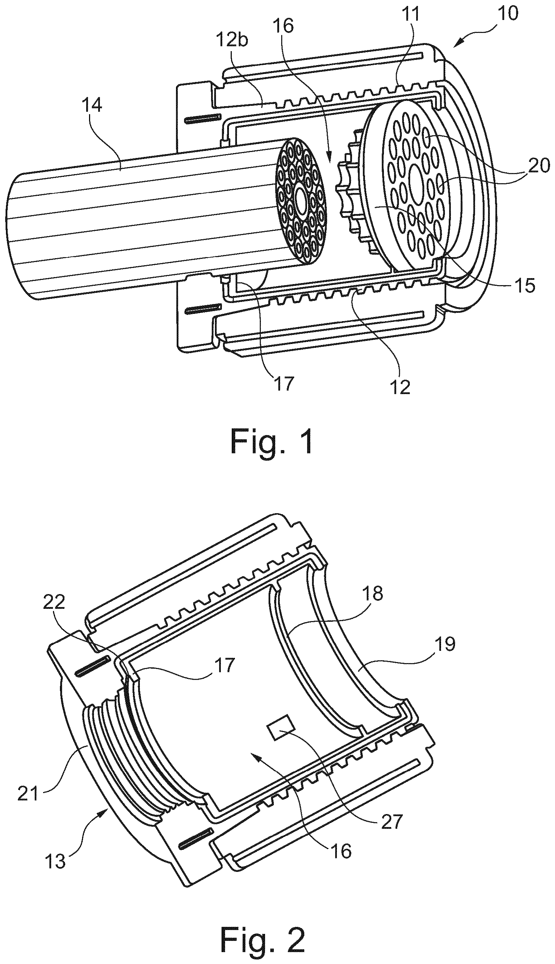

Die erfindungsgemäße Einrichtung umfasst ein Außengehäuse 10 mit einem Innengewinde 11, wobei dieses Außengehäuse teilbar ausgeführt sein kann und somit aus zwei Halbschalen bestehen kann, die miteinander verbindbar, insbesondere formschlüssig verbindbar sind wie später noch näher erläutert wird. In das Innengewinde dieses Außengehäuses 10 ist eine als Innengehäuse dienende Muffe einschraubbar, die aus zwei Muffenhalbschalen 12 besteht, die sich jeweils etwa über einen halben Umfang (also etwa 180 °) erstrecken, wobei diese beiden Muffenhalbschalen jeweils ein Außengewinde aufweisen, auf das das Innengewinde der beiden Halbschalen des Außengehäuses 10 aufschraubbar ist. Die beiden Muffenhalbschalen weisen in ihrem einen axialen Endbereich eine im Querschnitt gegenüber dem Innenraum der Muffenhalbschalen reduzierte Einführöffnung 13 auf, die man in Figur 2 besser erkennen kann. Diese Einführöffnung umschließt das dort eingeführte ankommende Kabelschutzrohr 14 an seinem äußeren Umfang wie in Figur 1 erkennbar ist. In dem Ausführungsbeispiel gemäß den Figuren 1 und 2 ist es so, dass dieses Kabelschutzrohr 14 einen polygonalen äußeren Umriss aufweist und entsprechend ist auch der Innendurchmesser der Einführöffnung 13 polygonal. Dadurch wird eine bessere Klemmwirkung der Muffenhalbschalen 12 auf das eingeführte Kabelschutzrohr 14 ausgeübt. Das Kabelschutzrohr 14 bildet eine äußere Umhüllung für eine Mehrzahl von kleineren Innenrohren, die ebenfalls Kabelschutzrohre sein können, beispielsweise für Glasfaserkabel.

Neben dem zweiteiligen Außengehäuse 10 und den beiden von diesem aufgenommenen Muffenhalbschalen 12 umfasst die in Figur 1 dargestellte Einrichtung noch einen Dichtstern 15, welcher in dem axial an die Einführöffnung anschließenden Innenraum 16 der Muffenhalbschalen 12 passend aufgenommen ist. Da der Innendurchmesser des Innenraums 16 größer ist als der Durchmesser der Einführöffnung 13, ergibt sich wie an Figur 1 entnimmt zwischen dem in den Innenraum 16 hineinragenden Kabelschutzrohr 14 und der Innenwandung der Muffenhalbschalen 12 ein Freiraum und an der der Einführöffnung 13 zugewandten Stirnseite wird der Innenraum 16 durch eine ringförmige Stirnfläche 17 begrenzt, an die sich dann axial die Einführöffnung 13 anschließt. Für eine axial lagefixierte Aufnahme dieses Dichtsterns 15 sind in den beiden Muffenhalbschalen innenseitig radial vorstehende Ringstege 18, 19 angeordnet, zwischen denen der Dichtstern aufgenommen ist. Diese beiden Ringstege 18, 19 sind wie Figur 2 zeigt zueinander parallel und mit Abstand angeordnet, wobei ihr Abstand der Stärke des Dichtsterns 15 in axialer Richtung entspricht. Letzterer umfasst eine Art Scheibe mit einer Vielzahl von achsparallelen Bohrungen 20 für die Durchführung der einzelnen kleineren Kabelschutzrohre, die aus dem größeren Kabelschutzrohr 14, welches in dem Innenraum 16 endet, herausgeführt und durch den Dichtstern hindurch geführt werden. Diese Bohrungen 20 sind so ausgeführt, dass jedes einzelne kleinere Kabelschutzrohr jeweils an seinem äußeren Umfang gas- und wasserdicht abgedichtet wird. Im Bereich der Einführöffnung 13 weisen die Muffenhalbschalen 12 radial innenseitig ein im Längsschnitt erkennbares Zahnprofil 21 auf, welches eine Auszugssicherung für das durch die Einfuhröffnung 13 hindurch geführte große Kabelschutzrohr 14 bildet, die ein Ausziehen in axialer Richtung verhindert. Zusätzlich kann für die auszugssichere Verankerung des größeren Kabelschutzrohrs 14 in den beiden dieses umfassenden Muffenhalbschalen 12 im Bereich der Auszugssicherung, insbesondere axial hinter der Einführöffnung 13 eine radiale Ringnut 22 vorgesehen sein, die beispielsweise einen Ringsteg am äußeren Umfang des Kabelschutzrohrs 14 aufnimmt. Dadurch, dass die einzelnen kleineren Kabelschutzrohre aus dem in dem Innenraum 16 endenden größeren Kabelschutzrohr 14 axial herausgeführt werden und dabei die äußeren kleineren Kabelschutzrohre gleichzeitig auch etwas nach radial außen geführt werden, bevor sie durch den Dichtstern 15 hindurch geführt werden, ergibt sich am Ende des Kabelschutzrohrs 14 eine gewisse Aufweitung und eine damit radial nach außen weisende Kraftkomponente, wohingegen das Kabelschutzrohr 14 in der Einführöffnung 13 durch die beiden Muffenhalbschalen nach radial innen gepresst wird. Dadurch wird die Pressung und somit auch die Abdichtung des größeren Kabelschutzrohrs 14 an seinem äußeren Umfang im Bereich der Einführöffnung erhöht. Ein Verdrehen des Kabelschutzrohrs 14 um seine Achse in der montierten Einrichtung wird bereits durch dessen polygonalen äußeren Umriss und den polygonalen Querschnitt im Bereich der Einführöffnung 13 verhindert.

In Figur 2 ist schematisch ein Sensor und Informationsträger 27 (Sensor-Chip) oder elektronischer Marker dargestellt, welcher gemäß einer Variante der vorliegenden Erfindung durch geeignete Methoden im Innenraum 16 der Einrichtung befestigt werden kann. Der Sensor und Informationsträger 27 kann beispielsweise auch durch ein kunststofftechnisches Formgebungsverfahren in die Wandung 10 einer der Halbschalen des Außengehäuses 10 oder der Muffe 12 a, b integriert werden (siehe auch Figur 1.) Der Sensor kann bevorzugt Informationen erfassen, speichern und/oder aktiv über Signale nach außen hin abgeben.

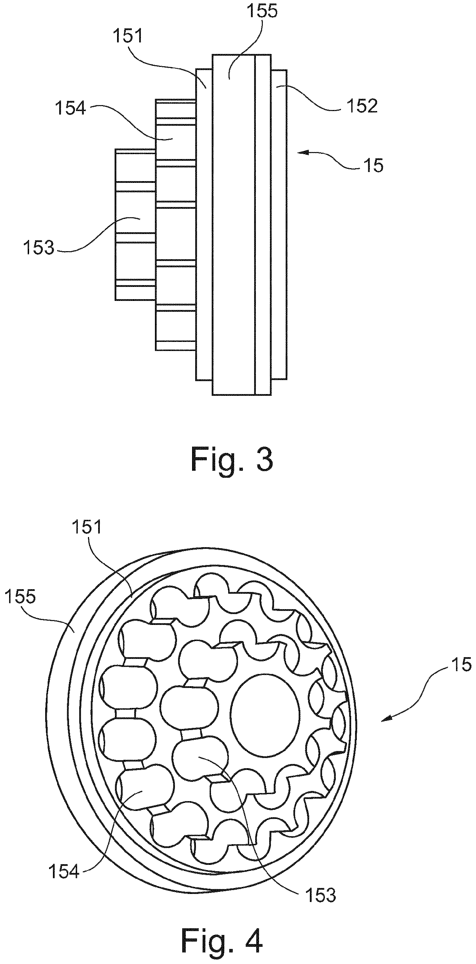

Weitere Details betreffend den in der erfindungsgemäßen Einrichtung verwendeten Dichtstern 15 werden nachfolgend anhand der Figuren 3 und 4 näher erläutert. Dieser Dichtring 15 ist bevorzugt ein Bauteil aus zwei Werkstoffkomponenten mit unterschiedlichen Eigenschaften, nämlich einem Kunststoffbereich 151, der bevorzugt aus einem Kunststoff mit guten Gleiteigenschaften besteht und einem mit diesem Kunststoffbereich bevorzugt einstückig verbundenen Elastomerbereich 152, der aus einem elastomeren Material, beispielsweise aus einem Werkstoff mit gummiähnlichen und somit gut abdichtenden Eigenschaften besteht. In Figur 4 ist der Dichtstern 15 perspektivisch von der Seite her gezeigt, an der sich der Kunststoffbereich 151 befindet. Man sieht, dass auf dieser Seite eine Vielzahl von Aufnahmen 153, 154 für einzelne kleinere Kabelschutzrohre eines Rohrbündels vorhanden sind, wobei jeweils eine erste Anzahl solcher Aufnahmen 153 auf einem inneren Kreisring und eine zweite oder weitere Anzahl von Aufnahmen 154 auf einem weiteren äußeren Kreisring angeordnet sein kann. Weiterhin ist es so, dass die Aufnahmen 153, 154 des Dichtsterns jeweils über einen Teil ihrer axialen Länge über einen Teil ihres Umfangs nach radial außen hin offen sind, so dass damit die einzelnen Kabelschutzrohre und die darin befindlichen Kabel für Reparaturen zugänglich sind. Ebenfalls von Vorteil ist es, dass die Aufnahmen 153, 154 für die einzelnen kleineren Rohre in axialer Richtung gesehen sich bevorzugt innenseitig konisch verjüngen, so dass der Einsteckbereich der jeweiligen Aufnahme, der in Figur 3 gezeigt ist zunächst eine größere Öffnungsweite aufweist und somit das einzelne Rohr dort bequem einschiebbar ist. Im weiteren Verlauf verjüngt sich dann die Aufnahme jeweils, wobei sich an die am Umfang teilweise offene Aufnahme bevorzugt eine vollständig geschlossene zylindrische Aufnahme anschließt, insbesondere in dem Elastomerbereich 152 (in Figur 3 rechts), so dass dort das einzelne Rohr an seinem äußeren Umfang jeweils fest umschlossen wird von einem Werkstoff mit elastomeren Eigenschaften. Dies führt zu einer guten Abdichtung. Das einzelne kleinere Kabelschutzrohr durchsetzt somit beim Einschieben in den Dichtstern 15 zunächst eine teilweise am Umfang offene Aufnahme 153, 154, die sich bereits in Einschubrichtung konisch verjüngen kann und gelangt dann in eine das Kabelschutzrohr an seinem Umfang vollständig umschließende zylindrische Aufnahme, die sich in der Scheibe 155 des Dichtsterns 15 befindet. Im Bereich dieser Scheibe 155 hat der Dichtstern 15 wiederum seine größte radiale Ausdehnung und wird dort in den Muffenhalbschalen 12 zwischen zwei Ringstegen 18, 19 gehalten und an seinem äußeren Umfang abgedichtet (siehe auch Figuren 1 und 2.)

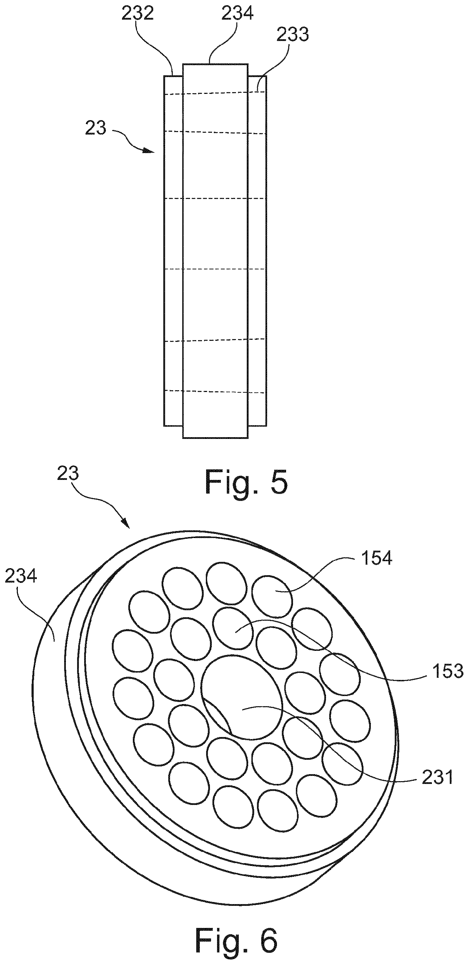

Eine mögliche alternative Variante zu dem Dichtstern 15 ist in den Figuren 5 und 6 gezeigt. Hier wird eine reine Dichtscheibe 23 anstelle eines Dichtsterns verwendet. Diese unterscheidet sich von dem Dichtstern dadurch, dass hier die Aufnahmen für die einzelnen kleineren Kabelschutzrohre an ihrem Umfang durchgehend über ihre axiale Länge geschlossen sind. Auch hier können in Einschubrichtung sich konisch verjüngende Aufnahmen verwendet werden. Die Dichtscheibe 23 kann gegebenenfalls auch in sich teilbar ausgebildet sein. Auch hier können die Aufnahmen 153, 154 für die einzelnen Rohre auf zueinander konzentrischen Kreisen angeordnet sein. Ebenso wie auch bei der Dichtscheibe 15 kann beispielsweise auch mittig eine im Durchmesser etwas größere Aufnahme 231 vorhanden sein, in die ein etwas größeres Kabelschutzrohr einschiebbar ist. Auch die Dichtscheibe 23 ist so ausgebildet, dass sie an ihrem äußeren Umfang an beiden Stirnseiten jeweils Absätze oder Ringschultern 232, 233 aufweist, während dazwischen sich ein im Durchmesser etwas größerer Mittelteil 234 befindet, so dass diese Dichtscheibe 23 in den Muffenhalbschalen beispielsweise zwischen zwei Ringstegen 18, 19 aufgenommen werden kann (siehe Figur 2.)

Nachfolgend wird nun unter Bezugnahme auf die Figuren 7 und 8 der Aufbau des aus zwei Halbschalen bestehenden Außengehäuses 10 der erfindungsgemäßen Einrichtung näher erläutert. Man sieht in Figur 7 oben die beiden Halbschalen 10 a und 10 b des Außengehäuses im demontierten Zustand. Man sieht, dass diese beiden Halbschalen 10 a, 10 b jeweils ein Innengewinde 11 aufweisen, so dass man diese Halbschalen des Außengehäuses auf die beiden Muffenhalbschalen 12 aufschrauben kann (siehe Figuren 1 und 2.) Beide Halbschalen des Außengehäuses sind über Nuten und Federn (beispielsweise in T-förmiger Ausführung) miteinander verbindbar. Dabei ist die jeweilige Anordnung von Nut und Feder an der rechten und an der linken Seite jeder der Halbschalen bevorzugt unterschiedlich, was den Vorteil hat, dass dadurch die Montage nur in einer Richtung möglich ist. Eine mögliche Ausführung dieser Nuten und Federn an den beiden Halbschalen 10 a und 10 b des Außengehäuses ist in den stirnseitigen Ansichten gemäß Figur 7 a erkennbar, wobei hier links die beiden Halbschalen montiert und rechts demontiert dargestellt sind, so dass man die ineinandergreifenden Nuten und Federn an den zu montierenden Hälften besser erkennen kann.

Es wird beispielsweise so montiert, dass beide Halbschalen 10 a, 10 b durch Aufschieben in Längsrichtung miteinander verbunden werden können, wobei Nut und Feder jeweils formschlüssig ineinander greifen. Ein solches Einschieben beim Verbinden der beiden Halbschalen 10 a, 10 b wird in Figur 8 gezeigt. Anschließend bilden die beiden Halbschalen des Außengehäuses eine Einheit in Form eines Hohlzylinders mit Innengewinde 11, der dann auf die Muffenhalbschalen 12 aufgeschraubt werden kann. Die Nuten an der einen der beiden Halbschalen können dabei beispielsweise nur zu einer Seite hin axial offen und am anderen Ende geschlossen sein, so dass nur von der einen offenen Seite her ein einschieben der zweiten Halbschale des Außengehäuses möglich ist. Damit und durch die asymmetrische Ausbildung der Halbschalen, die somit nicht spiegelgleich sind (siehe Figur 7 a) wird eine einzige Montagemöglichkeit zwangsweise vorgegeben, wodurch Montagefehler verhindert werden.

Figur 9 zeigt oben links eine an einer Anordnung von Kabelschutzrohren montierte Einrichtung nach der Anbringung der beiden Muffenhalbschalen 12, jedoch vor der Anbringung des Außengehäuses 10, welches hier neben den bereits montierten Muffenhalbschalen 12 mit verbundenen Halbschalen 10 a, 10 b in der unteren rechten Abbildung von Figur 9 noch einmal separat dargestellt ist. Man erkennt hier das Außengewinde 12 a der beiden Muffenhalbschalen 12, welches dem Innengewinde 11 des Außengehäuses 10 zugeordnet ist. Die beiden Halbschalen 10 a und 10 b des Außengehäuses sind hier anders als in Figur 7 a von der anderen Stirnseite her dargestellt, an der die jeweiligen Nuten in axialer Richtung geschlossen sind. Man erkennt anhand der Teilungslinie, dass die beiden Halbschalen 10 a, 10 b nicht zueinander spiegelsymmetrisch ausgebildet sind.

In Figur 10 ist eine der beiden Muffenhalbschalen 12 abgenommen, so dass man den Einblick in den Innenraum 16 hat (siehe untere Abbildung von Figur 10.) Anders als in Figur 1 ist jedoch das Außengehäuse 10 noch nicht aufgeschraubt, dafür sind aber in Figur 10 die einzelnen kleineren Innenrohre 24 dargestellt, die aus dem ankommenden größeren Kabelschutzrohr 14 herausgeführt und mittels der erfindungsgemäßen Einrichtung abgedichtet werden. Man kann in Figur 10 erkennen wie die einzelnen kleineren Innenrohre 24 in dem Innenraum 16 der Muffenhalbschale 12 nach dem Durchtritt des ankommenden Kabelschutzrohrs 14 durch die Einführöffnung etwas radial nach außen geführt und danach durch den Dichtstern 15 hindurch geführt und dort abgedichtet werden. Wichtig ist auch, dass die kleinen Innenrohre in dem Dichtstern spannungsfrei geführt und aufgenommen sind.
In der oberen Abbildung von Figur 10 ist die zweite abgenommene Muffenhalbschale für sich separat dargestellt. Hier erkennt man, dass sich radial außenhalb im Bereich der Einführöffnung 13 an jeder der beiden Muffenhalbschalen korrespondierende Elemente befinden, beispielsweise eine Vertiefung 12 c und ein Steg 12 d entsprechender Größe, so dass diese Elemente bei der Montage der beiden Muffenhalbschalen 12 jeweils wechselseitig in die entsprechenden Elemente der jeweils anderen Muffenhalbschale eingreifen und sich beim Montieren in diesem Bereich ein Formschluss zwischen beiden Muffenhalbschalen ergibt. Durch diese Elemente 12 c, 12 d wird auch die Art der Montage vorgegeben und die Montage erleichtert. Nach dem Verbinden beider Muffenhalbschalen 12 miteinander können dann die beiden miteinander verbundenen Hälften 10 a, 10 b des Außengehäuses auf die Muffenhalbschalen aufgeschraubt werden (siehe auch Figur 9), wodurch sich dann eine radiale Pressung ergibt, die die einzelnen in den Dichtstern 15 eingebetteten kleineren Innenrohre 24 gut abdichtet, dadurch dass der Dichtstern von den beiden Muffenhalbschalen von außen mit einer Presskraft beaufschlagt wird. Gleichzeitig wirkt die radiale Presskraft auch im Bereich der Einführöffnung 13 auf das Kabelschutzrohr 14 ein und dichtet diese an seinem äußeren Umfang ab.

Figur 11 zeigt noch einmal die fertig montierte Einrichtung nach dem Aufschrauben des Außengehäuses 10, durch welches die beiden Muffenhalbschalen 12 radial zusammengepresst werden, aufgrund der axial im Anschluss an das Außengewinde 12 an den Muffenhalbschalen 12 vorgesehenen Keilfläche 12 b, die man in der Schnittdarstellung gemäß Figur 1 erkennen kann.

Figur 12 zeigt noch einmal schematisch eine Anordnung von Rohren, die mittels einer erfindungsgemäßen Einrichtung im Bereich eines Schachts, durch den sie hindurch geführt sind, miteinander dicht zu verschließen sind. Hier ist das ankommende größere Kabelschutzrohr (Schutzrohr) 14 erkennbar, welches im Erdreich beispielsweise in einem im Durchmesser noch größeren Schutzrohr 25, gegebenenfalls zusammen mit weiteren Rohren oder Leitungen verlegt ist. Das Kabelschutzrohr 14 wird in einen Schacht 26 eingeführt, in dem das Kabelschutzrohr 14 unterbrochen ist, so dass einzelne kleinere Rohre 24, Kabel oder Leitungen aus dem Kabelschutzrohr herausgeführt werden und so beispielsweise für Reparaturen oder Wartungsarbeiten zugänglich sind. Diese einzelnen kleineren Innenrohre 24 werden in einem solchen Schacht 26 mittels der erfindungsgemäßen Einrichtung gas- und wasserdicht abgedichtet und verbunden mit entsprechenden Innenrohren, die dann wieder über ein diese aufnehmendes größeres Kabelschutzrohr 14 aus dem Schacht 26 heraus geführt werden. Das Kabelschutzrohr 14 kann an seinem Umfang polygonal oder gegebenenfalls auch zylindrisch sein.

### Bezugszeichenliste

- 10: Außengehäuse
- 10 a: Halbschale
- 10 b: Halbschale
- 11: Innengewinde
- 12: Muffenhalbschalen
- 12 a: Außengewinde
- 12 b: Keilfläche
- 12 c: Vertiefung
- 12 d: Steg (Erhöhung)
- 13: Einführöffnung
- 14: Schutzrohr, äußere Umhüllung
- 15: Dichtstern
- 151: Kunststoffbereich
- 152: Elastomerbereich
- 153: Aufnahmen für Kabelschutzrohre
- 154: Aufnahmen für Kabelschutzrohre
- 155: Scheibe des Dichtsterns
- 16: Innenraum
- 17: ringförmige Stirnfläche
- 18: Ringsteg
- 19: Ringsteg
- 20: Bohrungen
- 21: Zahnprofil
- 22: Ringnut
- 23: Dichtscheibe
- 231: mittlere Aufnahme
- 232: Ringschulter
- 233: Ringschulter
- 234: Mittelteil
- 24: kleineres Innenrohr
- 25: Schutzrohr
- 26: Schacht
- 27: Sensor und Informationsträger

## Patentansprüche

1. Einrichtung zur axialen Verbindung, Abdichtung und/oder zum Verschließen von Rohren, umfassend zwei die zu verbindenden und/oder abzudichtenden Rohre umgreifende Muffenhalbschalen, wenigstens ein von den Muffenhalbschalen aufgenommenes Dichtelement sowie eine außen auf die Muffenhalbschalen aufbringbare Vorrichtung, um diese zu Klemmen und/oder gegenseitig zu Verspannen, wobei die außen auf die Muffenhalbschalen aufbringbare Vorrichtung ein Außengehäuse (10) mit einem Innengewinde (11) umfasst und die Muffenhalbschalen (12) mit einem Außengewinde (12 a) versehen sind, wobei das Außengehäuse unter Klemmwirkung auf die Muffenhalbschalen aufschraubbar ist,
wobei Einzelrohre (24) zu einem Rohrbündel gehören, welches eine äußere Umhüllung (14) hat, die in eine Einführöffnung (13) der Muffenhalbschalen (12) eingeführt wird,
**dadurch gekennzeichnet, dass** das Dichtelement eine Dichtscheibe (23) oder einen Dichtstern (15) umfasst mit einer Vielzahl von Bohrungen oder Aufnahmen für eine passende und spannungsfreie Lagerung der Einzelrohre (24), die diese jeweils an ihrem Umfang umschließen, und dass außen an den Muffenhalbschalen axial an das Außengewinde anschließend eine Konusfläche oder Keilfläche (12 b) ausgebildet ist, der eine ringförmige konische Endfläche am Außengehäuse zugeordnet ist, so dass beim Aufschrauben des Außengehäuses eine radiale Klemmwirkung erzeugt wird.

2. Einrichtung zur axialen Verbindung von Rohren nach Anspruch 1, **dadurch gekennzeichnet, dass** im Bereich der als Rohrklammer dienenden Einführöffnungen (13) der Muffenhalbschalen, welche das zu verbindende Rohr an seinem äußeren Umfang umschließen, wenigstens eine Auszugssicherung vorgesehen ist, vorzugsweise in Form eines Zahnprofils (21) oder ähnlicher gegen eine Auszugskraft in axialer Richtung wirkender Sperrelemente.

3. Einrichtung zur axialen Verbindung von Rohren nach Anspruch 1, **dadurch gekennzeichnet, dass** die Dichtscheibe (23) oder der Dichtstern (15) am Umfang teilbar ist und aus zwei Halbelementen oder Halbschalen oder mehreren Teilelementen besteht, die im montierten Zustand gemeinsam die Dichtscheibe oder den Dichtstern bilden.

4. Einrichtung zur axialen Verbindung von Rohren nach Anspruch 1, **dadurch gekennzeichnet, dass** in den Muffenhalbschalen (12) wenigstens ein innenseitig radial vorstehender Ringsteg (18, 19) angebracht ist zur axialen Lagefixierung der Dichtscheibe (23) oder des Dichtsterns (15).

5. Einrichtung zur axialen Verbindung von Rohren nach einem der Ansprüche 1 bis 4, **dadurch gekennzeichnet, dass** die Dichtscheibe (23) oder der Dichtstern (15) einen größeren oder gleich großen äußeren Durchmesser aufweisen wie die Einführöffnung (13) für die äußere Umhüllung (14) der Einzelrohre.

6. Einrichtung zur axialen Verbindung von Rohren nach einem der Ansprüche 1 bis 5, **dadurch gekennzeichnet, dass** die Achsen der Aufnahmen (153, 154) der Dichtscheibe (23) oder des Dichtsterns (15) für die Einzelrohre (24) auf mindestens zwei konzentrischen Kreisen um den Mittelpunkt der Dichtscheibe oder des Dichtsterns herum angeordnet sind.

7. Einrichtung zur axialen Verbindung von Rohren nach einem der Ansprüche 1 bis 6, **dadurch gekennzeichnet, dass** die Aufnahmen (153, 154) oder Bohrungen der Dichtscheibe (23) oder des Dichtsterns (15) für die Einzelrohre in axialer Richtung konisch ausgebildet sind.

8. Einrichtung zur axialen Verbindung von Rohren nach einem der Ansprüche 1 bis 7, **dadurch gekennzeichnet, dass** die Aufnahmen (153, 154) oder Bohrungen der Dichtscheibe (23) oder des Dichtsterns (15) jeweils über einen Teil ihrer axialen Länge über einen Teil ihres Umfangs nach radial außen hin offen sind.

9. Einrichtung zur axialen Verbindung von Rohren nach einem der Ansprüche 1 bis 8, **dadurch gekennzeichnet, dass** die gemeinsame äußere Umhüllung (Schutzrohr 14) der Einzelrohre, die in die Einführöffnung (13) der Muffenhalbschalen (12) eingeführt wird, einen Vieleckumriss aufweist.

10. Einrichtung zur axialen Verbindung von Rohren nach einem der Ansprüche 1 bis 9, **dadurch gekennzeichnet, dass** das Außengehäuse (10) teilbar ist und zwei miteinander vorzugsweise formschlüssig verbindbare Halbschalen (10 a, 10 b) umfasst.

11. Einrichtung zur axialen Verbindung von Rohren nach Anspruch 10, **dadurch gekennzeichnet, dass** die beiden Halbschalen jeweils entlang ihrer Längsränder mit Nuten und/oder Federn versehen sind über diese Elemente zu einem zylindrischen im wesentlichen rohrförm igen Außengehäuse verbindbar sind.

12. Einrichtung zur axialen Verbindung von Rohren nach einem der Ansprüche 1 bis 11, **dadurch gekennzeichnet, dass** das Dichtelement (15, 23) als Mehrkomponentensystem ausgeführt ist bestehend aus einem Kunststoff mit guter Gleitwirkung im Bereich der Aufnahmen für die Einzelrohre und einem Dichtungsmaterial, insbesondere einem Elastomeren, im Dichtbereich.

13. Einrichtung zur axialen Verbindung von Rohren nach Anspruch 12, **dadurch gekennzeichnet, dass** der Kunststoff mit guter Gleitwirkung im Bereich der Aufnahmen für die Einzelrohre PP, PE, PE-HD, PA oder PVC gegebenenfalls mit einem Verstärkungsmaterial wie Glasfaser oder Füllstoffen wie Calciumcarbonat und/oder unter Beifügung von Zusatzstoffen zur Verbesserung der Gleitwirkung umfasst.

14. Einrichtung zur axialen Verbindung von Rohren nach Anspruch 12 oder 13, **dadurch gekennzeichnet, dass** das Dichtelement (15, 23) als Dichtmaterial im Dichtbereich (152) TPE, EPDM oder NBR umfasst und/oder einen Mischkunststoff mit einem Thermoplasten vorzugsweise einem Polyolefin und/oder weiteren Elastomeren.

15. Einrichtung zur axialen Verbindung von Rohren nach einem der Ansprüche 1 bis 14, **dadurch gekennzeichnet, dass** dieses mindestens einen Sensor und Informationsträger oder einen elektronischen Marker aufweist.

16. Einrichtung zur axialen Verbindung von Rohren nach Anspruch 15, **dadurch gekennzeichnet, dass** der Sensor und Informationsträger oder der elektronische Marker durch ein kunststofftechnisches Formgebungsverfahren in die Wandung einer der Halbschalen (10 a, 10 b) des Außengehäuses (10) oder einer der Muffenhalbschalen (12) integriert ist.

17. Einrichtung zur axialen Verbindung von Rohren nach Anspruch 15 oder 16, **dadurch gekennzeichnet, dass** der Sensor und Informationsträger oder der elektronische Marker im Innenraum (16) der Einrichtung angeordnet und befestigt ist.

## Claims

1. A device for the axial connection, sealing, and/or for the closure of tubes, comprising two sleeve-form half-shells enclosing the tubes that are to be connected and/or sealed, at least one sealing element accommodated by the sleeve-form half-shells, and also a device that can be externally applied onto the sleeve-form half-shells, in order to clamp them, and/or to clamp them against each other, wherein
the device that can be externally applied onto the sleeve-form half-shells comprises an outer housing (10) with an internal thread (11), and the sleeve-form half-shells (12) are provided with an external thread (12a), wherein
the outer housing can be screwed onto the sleeve-form half-shells with a clamping action, wherein individual tubes (24) belong to a pipe bundle, which has an outer covering (14), which is introduced into an introductory opening (13) of the sleeve-form half-shells (12),
**characterised in that**,
the sealing element comprises a sealing plate (23) or sealing star (15) with a multiplicity of holes or seatings for appropriate and stress-free mounting of the individual tubes (24), which in each case enclose the latter on their circumference, and **in that** a conical surface or wedge surface (12b) is formed externally on the sleeve-form half-shells axially adjoining the external thread, to which is assigned an annular conical end surface on the outer housing, such that when screwing on the outer housing a radial clamping action is generated.

2. The device for the axial connection of tubes in accordance with claim 1,
**characterised in that**,
in the region of the introductory openings (13) of the sleeve-form half-shells, serving as pipe clamps, which enclose the pipe that is to be connected on its outer circumference, at least one extraction security feature is provided, preferably in the form of a toothed profile (21), or similar locking elements, acting against an extraction force in the axial direction.

3. The device for the axial connection of tubes in accordance with claim 1,
**characterised in that**,
the sealing plate (23) or sealing star (15) can be sub-divided on the circumference, and consists of two half-elements or half-shells, or a plurality of sub-elements, which in the assembled state together form the sealing plate or sealing star.

4. The device for the axial connection of tubes in accordance with claim 1,
**characterised in that**,
in the sleeve-form half-shells (12) at least one annular web (18, 19), projecting radially internally, is fitted for purposes of fixing the axial location of the sealing plate (23) or sealing star (15).

5. The device for the axial connection of tubes in accordance with one of the claims 1 to 4,
**characterised in that**,
the sealing plate (23) or sealing star (15) has a greater outer diameter, or the same outer diameter, as the introductory opening (13) for the outer covering (14) of the individual tubes.

6. The device for the axial connection of tubes in accordance with one of the claims 1 to 5, **characterised in that**,
the axes of the seatings (153, 154) of the sealing plate (23) or sealing star (15) for the individual tubes (24) are arranged on at least two concentric circles about the centre point of the sealing plate or sealing star.

7. The device for the axial connection of tubes in accordance with one of the claims 1 to 6, **characterised in that**,
the seatings (153, 154) or bores of the sealing plate (23) or sealing star (15) for the individual tubes (24) are conically designed in the axial direction.

8. The device for the axial connection of tubes in accordance with one of the claims 1 to 7, **characterised in that**,
the seatings (153, 154) or bores of the sealing plate (23) or sealing star (15) are in each case open radially outwards over a part of the axial length over a part of their circumference.

9. The device for the axial connection of tubes in accordance with one of the claims 1 to 8, **characterised in that**,
the common outer covering (protective tube 14) of the individual tubes, which are introduced into the introductory opening (13) of the sleeve-form half-shells (12), has a polygonal contour.

10. The device for the axial connection of tubes in accordance with one of the claims 1 to 9, **characterised in that**,
the outer housing (10) can be sub-divided, and comprises two half-shells (10a, 10b) that can be connected with one another, preferably in a form fit.

11. The device for the axial connection of tubes in accordance with claim 10,
**characterised in that**,
the two half-shells are in each case provided along their longitudinal edges with grooves and/or springs and can be connected by way of these elements to form an essentially annular cylindrical outer housing.

12. The device for the axial connection of tubes in accordance with one of the claims 1 to 11, **characterised in that**,
the sealing element (15, 23) is embodied as a multicomponent system, consisting of a plastic, with a good sliding action in the vicinity of the seatings for the individual tubes, and a sealing material, in particular an elastomer, in the sealing region.

13. The device for the axial connection of tubes in accordance with claim 12,
**characterised in that**,
the plastic with a good sliding action in the vicinity of the seatings for the individual tubes comprises PP, PE, PE-HD, PA or PVC, if required with a reinforcement material such as glass fibres, or fillers such as calcium carbonate, and/or with the addition of additives for purposes of improving the sliding action.

14. The device for the axial connection of tubes in accordance with claim 12 or 13,
**characterised in that**,
the sealing element (15, 23) comprises TPE, EPDM or NBR as a sealing material in the sealing region (152), and/or a mixed plastic with a thermoplastic, preferably a polyolefin, and/or further elastomers.

15. The device for the axial connection of tubes in accordance with one of the claims 1 to 14, **characterised in that**,
the latter has at least one sensor and information carrier, or an electronic marker.

16. The device for the axial connection of tubes in accordance with claim 15,
**characterised in that**,
the sensor and information carrier, or the electronic marker, is integrated by means of a plastic moulding process into the wall of one of the half-shells (10a, 10b) of the outer housing (10), or one of the sleeve-form half-shells (12)

17. The device for axial connection of tubes in accordance with claim 15 or 16,
**characterised in that**,
the sensor and information carrier, or the electronic marker, is arranged and attached in the interior (16) of the device.

## Revendications

1. Système destiné à assembler en direction axiale, à étanchéifier et/ou à fermer des tubes, comprenant deux demi-coques de manchon entourant les tubes qui doivent être assemblés et/ou étanchéifiés, au moins un élément d'étanchéité réceptionné par les demi-coques de manchon, ainsi qu'un dispositif susceptible d'être posé sur les demi-coques de manchon, pour serrer ces dernières et/ou les contraindre mutuellement, le dispositif susceptible d'être monté à l'extérieur sur les demi-coques de manchon comprenant un boîtier extérieur (10), avec un taraudage (11) et les demi-coques de manchon (12) étant munies d'un filetage (12 a), le boîtier extérieur pouvant se visser sur les demi-coques de manchon sous effet de serrage,
des tubes individuels (24) faisant partie d'un faisceau de tubes, lequel possède une enveloppe (14) extérieure, qui est introduite dans un orifice d'introduction (13) des demi-coques de manchon (12), **caractérisé en ce que** l'élément d'étanchéité comprend un disque d'étanchéité (23) ou une étoile d'étanchéité (15) avec une pluralité de perçages ou logements pour loger de manière ajustée et sans tension les tubes individuels (24) qui entourent chacun d'eux sur leur circonférence et **en ce qu'**à l'extérieur, sur les demi-coques de manchon, se raccordant en direction axiale sur le filetage est conçue une surface conique ou surface cunéiforme (12 b) à laquelle est associée une surface d'extrémité annulaire conique sur le boîtier extérieur, de sorte que lors du vissage du boîtier extérieur, il soit généré un effet de serrage radial.

2. Système destiné à assembler des tubes en direction axiale selon la revendication 1, **caractérisé en ce que** dans la zone des orifices d'introduction (13) faisant office de collier à tube des demi-coques de manchon, lesquelles entourent le tube devant être assemblé sur sa périphérie extérieure, il est prévu au moins un blocage anti-retrait, de préférence sous la forme d'un profilé denté (21) ou d'autres éléments de blocage agissant à l'encontre d'un effort de retrait dans la direction axiale.

3. Système destiné à assembler des tubes en direction axiale selon la revendication 1, **caractérisé en ce que** le disque d'étanchéité (23) ou l'étoile d'étanchéité (15) est divisible sur la périphérie et est constitué(e) de deux demi-éléments ou demi-coques ou de plusieurs éléments partiels, qui lorsqu'ils sont montés forment en commun le disque d'étanchéité ou l'étoile d'étanchéité.

4. Système destiné à assembler des tubes en direction axiale selon la revendication 1, **caractérisé en ce que** dans les demi-coques de manchon (12) est montée au moins une barrette annulaire (18, 19) saillant en direction radiale sur la face intérieure, pour la fixation en position axiale du disque d'étanchéité (23) ou de l'étoile d'étanchéité (15).

5. Système destiné à assembler des tubes en direction axiale selon l'une quelconque des revendications 1 à 4, **caractérisé en ce que** le disque d'étanchéité (23) ou l'étoile d'étanchéité (15) présentent un diamètre extérieur supérieur ou égal à celui de l'orifice d'introduction (13) pour l'enveloppe (14) extérieure des tubes individuels.

6. Système destiné à assembler des tubes en direction axiale selon l'une quelconque des revendications 1 à 5, **caractérisé en ce que** les axes des logements (153, 154) du disque d'étanchéité (23) ou de l'étoile d'étanchéité (15) pour les tubes individuels (24) sont placés sur au moins deux cercles concentriques, autour du point médian du disque d'étanchéité ou de l'étoile d'étanchéité.

7. Système destiné à assembler des tubes en direction axiale selon l'une quelconque des revendications 1 à 6, **caractérisé en ce que** les logements (153, 54) ou perçages du disque d'étanchéité (23) ou de l'étoile d'étanchéité (15) pour les tubes individuels (24) sont conçus sous forme conique en direction axiale.

8. Système destiné à assembler des tubes en direction axiale selon l'une quelconque des revendications 1 à 7, **caractérisé en ce que** sur une partie de leur longueur axiale, les logements (153, 154) ou perçages du disque d'étanchéité (23) ou de l'étoile d'étanchéité (15) sont ouverts chacun sur une partie de leur périphérie, en direction radiale vers l'extérieur.

9. Système destiné à assembler des tubes en direction axiale selon l'une quelconque des revendications 1 à 8, **caractérisé en ce que** l'enveloppe extérieure commune (tube protecteur 14) des tubes individuels que l'on introduit dans l'orifice d'introduction (13) des demi-coques de manchon (12) présente un contour polygonal.

10. Système destiné à assembler des tubes en direction axiale selon l'une quelconque des revendications 1 à 9, **caractérisé en ce que** le boîtier extérieur (10) est divisible et comprend deux demi-coques (10 a, 10 b) qui peuvent être assemblées l'une à l'autre de préférence par complémentarité de forme.

11. Système destiné à assembler des tubes en direction axiale selon la revendication 10, **caractérisé en ce que** les deux demi-coques sont chacune munies le long de leurs bords longitudinaux de rainures et/ou de languettes et par l'intermédiaire de ces éléments, peuvent être assemblées en un boîtier extérieur cylindrique, sensiblement tubulaire.

12. Système destiné à assembler des tubes en direction axiale selon l'une quelconque des revendications 1 à 11, **caractérisé en ce que** l'élément d'étanchéité (15, 23) est réalisé en tant que système multicomposants, constitué d'une matière plastique à bon effet glissant dans la zone des logements pour les tubes individuels et d'une matière d'étanchéité, notamment d'un élastomère, dans la zone d'étanchéité.

13. Système destiné à assembler des tubes en direction axiale selon la revendication 12, **caractérisé en ce que** dans la zone des logements pour les tubes individuels, la matière plastique à bon effet glissant comprend du PP, du PE, du PE-HD, du PA ou du PVC, le cas échéant avec une matière de renfort comme de la fibre de verre ou des agents de charge, comme du carbonate de calcium et/ou avec ajout d'adjuvants pour améliorer l'effet glissant.

14. Système destiné à assembler des tubes en direction axiale selon la revendication 12 ou la revendication 13, **caractérisé en ce que** dans la zone d'étanchéité (152), l'élément d'étanchéité (15, 23) comprend en tant que matière d'étanchéité du TPE, de l'EPDM ou du NBR et/ou une matière plastique mixte avec une matière thermoplastique, de préférence une polyoléfine et/ou un élastomère supplémentaire.

15. Système destiné à assembler des tubes en direction axiale selon l'une quelconque des revendications 1 à 14, **caractérisé en ce qu'**il comporte au moins un capteur et des supports d'informations ou un marqueur électronique.

16. Système destiné à assembler des tubes en direction axiale selon la revendication 15, **caractérisé en ce que** par un procédé de façonnage technique de la matière plastique, le capteur et support d'informations ou le marqueur électronique est intégré dans la paroi de l'une des demi-coques (10 a, 10 b) du boîtier extérieur (10) ou dans l'une des demi-coques de manchon (12).

17. Système destiné à assembler des tubes en direction axiale selon la revendication 15 ou la revendication 16, **caractérisé en ce que** le capteur et support d'informations ou le marqueur électronique est placé et fixé dans l'espace intérieur (16) du système.
